# EUROPEAN PATENT APPLICATION

(11) **EP 1 978 627 A1**
(43) Date of publication of application: **08.10.2008**
(21) Application number: 07105759.0
(22) Date of filing: 05.04.2007
(51) Int. Cl.: H02M 3/338

(54) **Transformer circuit of charger of electric tools**

(71) Applicant: Ferm B.V., 8028 PM Zwolle (NL)
(72) Inventor: Woelders, Niels Jacob, 200081 Shanghai (CN)
(74) Representative: Viering, Jentschura & Partner

(57) **Abstract**

This invention is directed to a transformer circuit of a charger (14) for electrical tools, which comprises a power output connected with a rectifier and filter circuit (1). To provide a transformer circuit of charger for electrical tools to solve the problem of large, heavy and expensive chargers, the invention is characterized in that an output (6) of a rectifier and filter circuit (1) is connected with a transistor base drive circuit (4), which is connected with a base electrode of a transistor (T1, T2) in a transistor oscillating circuit (5); an output (16) of the transistor oscillating circuit (5) is connected with a primary coil (11) of a high tension transformer (2), whose secondary coil is connected with a second rectifier and filter circuit (3) as the output of the whole circuit which transforms a high-frequency, high-tension voltage into a direct voltage for charging.

## Description

The invention refers to a transformer circuit of a charger comprising a power output connected with a rectifier and filter circuit and a charger comprising such a transformer circuit.

The present invention involves the related technical field of internal circuitry of electrical tools, especially a kind of a transformer circuit of a charger for said electrical tools, especially so called power tools.

Traditional chargers for electrical tools transform an alternating voltage (AC) of 220 V or 110 V by means of a transformer into a low voltage, which is further rectified and filtered to be a direct voltage (DC) as charging voltage of said chargers. However, traditional transformer are large, heavy and expensive. Presently, charging voltages of chargers are about 14.4-24 V and the charging current is about 1.2-2.0 A.

Therefore, there is a need for a high-tension, high-frequency oscillating circuit for such power, so that the aim of the present invention is to provide a transformer circuit of charger for electrical tools to solve the problem of large, heavy and expensive traditional chargers for electrical tools.

This problem is to be solved by a transformer circuit of a charger comprising a power output connected with a rectifier and filter circuit which is characterized in, that an output of said rectifier and filter circuit is connected with a transistor base drive circuit, which transistor base drive circuit is connected with a base electrode of each of at least two transistors in a transistor oscillating circuit, whereas the transistors are connected with each other and wherein an output of said transistor oscillating circuit is connected with a primary coil of a high-tension, high-frequency transformer, whose secondary coil is connected with a second rectifier and filter circuit.

By the invention a charger for electrical tools may be designed, which needs a high-tension, high-frequency transformer which is much cheaper and relatively smaller than those usually used. The material cost of the whole transformer circuit and the charger comprising this transformer circuit is cheaper than for conventional transformer or charger, which remarkably saves cost.

Trigger diodes are used to construct a transistor oscillating circuit, which transforms an alternating voltage of 50 Hz or 60 Hz into a high-frequency alternating voltage of 20-100 Hz. Therefore, a low voltage can be obtained from a high-frequency transformer which is relatively smaller and cheaper. A low voltage can be transformed into a direct voltage for charging a voltage of said charger after rectification and filtering. The material cost of the whole circuit is cheaper than those of a conventional transformer, which may remarkably save cost.

An advantageous embodiment of the invention is
characterized by a first rectifier and filter circuit, a transistor base drive circuit comprising a first and a second trigger diode, a transistor oscillating circuit comprising a first and a second transistor and a high-tension, high-frequency transformer, wherein an output of the first rectifier and filter circuit is connected with the first and second trigger diode of the transistor base drive circuit, which first and second trigger diodes are connected with the base electrode of one of the first or second transistors of the transistor oscillating circuit, respectively, whereas the first and second transistor are connected with each other, and wherein an output of said transistor oscillating circuit is connected with a primary coil of the high-tension, high-frequency transformer, whose secondary coil is connected with a second rectifier and filter circuit.

In further embodiments of the invention, the transistor base drive circuit comprises the first and the second trigger diode, a first and a second resistor, and a first and a second exciting coil and the transistor oscillating circuit comprises the first and the second triode, a first and a second feedback resistor, a first and a second capacitor and a coil.

Additionally, according to the invention, the transformer circuit of a charger is characterized in that the output of the rectifier and filter circuit is connected in parallel with the positive electrodes of said trigger diodes, respectively.

In a further embodiment, a series circuit of the first exciting coil and the first resistor is connected between a negative electrode of the first trigger diode and a base electrode of the first triode, whereas the first feedback resistor being connected between said negative electrode of the first trigger diode and an emitting electrode of the first triode; and that said negative electrode of the first trigger diode being connected in parallel with a collector electrode of the second triode and the coil, whereas another side of the coil is connected with one side of the primary coil of the high-frequency transformer.

Further, the invention is advantageously characterized in, that a series circuit of the second exciting coil and the second resistor is connected between a negative electrode of the second trigger diode and earth; a negative electrode of the second trigger diode is connected with a base electrode of the second triode; the second feedback resistor is connected between an emitting electrode of the second triode and earth; and another side of said primary coil of said high-frequency, high-tension transformer is connected in parallel with the first and second capacitors, whereas another side of the first capacitor is connected with the collector electrode of the first triode, and the other side of the second capacitor is connected with earth.

The above mentioned problem is according to the invention also solved by a charger comprising a transformer circuit according to one of the claims 1-7. Embodiments of an advantageous design comprise additionally a second rectifier and filter circuit and/or a high-tension, high-frequency transformer.

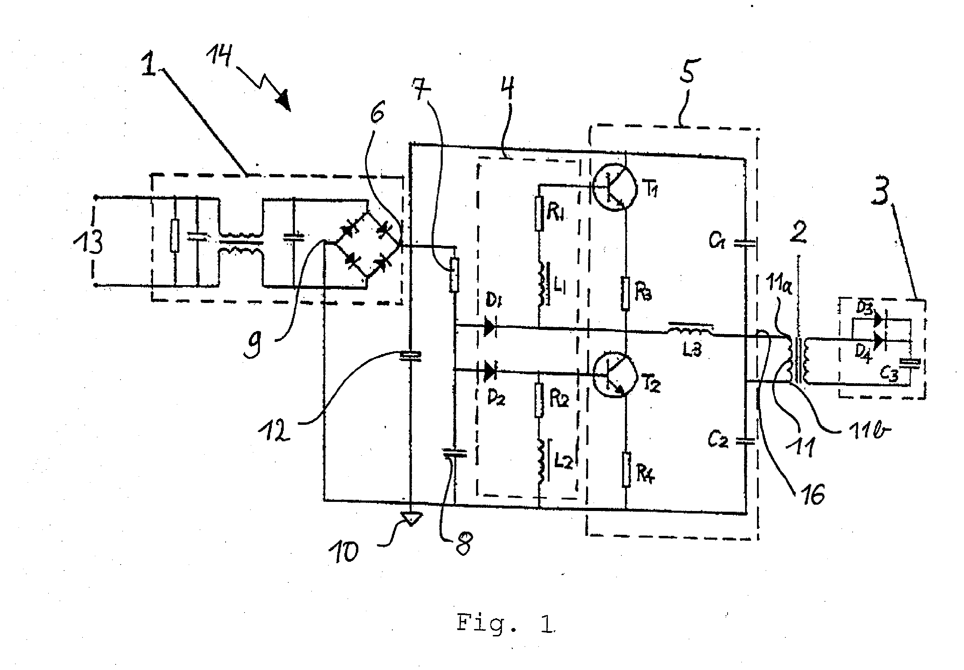

The invention is explained in an exemplary manner in connection with the only figure. The attached figure discloses the structural representation of this invention.

The only figure shows a charger 14 comprising several circuits 1, 2, 3, 4 and 5 transforming an AC input voltage 13 into a DC voltage 3 to charge electric tools, particularly so called power tools. The power input of input AC voltage 13 is connected with a rectifier and filter circuit 1, of which a first output 6 is connected with a transistor base drive circuit 4. The transistor base drive circuit is followed by a transistor oscillating circuit 5, so that the rectifier and filter circuit 1 is connected to the base electrode of a transistor T1 in the transistor oscillating circuit 5. An output of the transistor oscillating circuit 5 is connected with a primary coil 11 of a high tension transformer 2, whose secondary coil 15 is connected with a second rectifier and filter circuit 3 consisting of a repaid-recovering rectifier diode D3, a filter capacitor C3 and a diode D4. As the output of the whole transformer circuit comprising the rectifier and filter circuit 1, the transistor base drive circuit 4, the transistor oscillating circuit 5, the high-tension and high-frequency transformer 2 and the second rectifier and filter circuit 3, the transformer circuit according to the present invention transforms a high-frequency, high-tension voltage into a direct voltage for charging.

The above-mentioned transistor base drive circuit 4 consists of trigger diode D1 and D2, resistors R1 and R2 and exciting coils L1 and L2.

The transistor oscillating circuit 5 consists of triodes T1 and T2, feedback resistors R3 and R4, capacitors C1 and C2 and a coil L3. The triodes T1 and T2 may be bipolar transistors, e.g. npn-transistors.

A first output contact 6 of the rectifier and filter circuit 1 is connected with positive electrodes of trigger diodes D1 and D2 being parallel to each other. The rectifier and filter circuit 1 may be connected with the positive electrodes of the trigger D1 and D2 via an additional resistor 7, while the positive electrodes of the trigger diodes D1 and D2 may be connected with earth 10 via an additional capacitor 8. A second output contact 9 of the rectifier and filter circuit 1 is connected to earth 10.

The series circuit of the exciting coil L1 and the resistor R1 is connected between the negative electrode of the diode D1 and the base electrode of the triode T1. The feedback resistor R3 is connected between the negative electrode of diode D1 and the emitting electrode of the triode T1. The negative electrode of diode D1 is further connected in parallel with the collector electrode of triode T2 and coil L3. The other side of the coil L3 is connected with one side 11a of the primary coil 11 of the high-frequency transformer 2.

The series circuit of the resistor R2 and the exciting coil L2 is connected between the negative electrode of diode D2 and earth 10. The negative electrode of diode D2 is further connected with the base electrode of triode T2. The feedback resistor R4 is connected between the emitting electrode of triode T2 and earth 10.

The other side 11b of the primary coil 11 of the high-frequency transformer 2 is connected in parallel with the capacitors C1 and C2. The other side of the capacitor C1 is connected with the collector electrode of triode T1, while the other side of the capacitor C2 is connected with earth 10. The collector electrode of triode T1 may also be connected to earth 10 via an additional capacitor 12.

When the input AC voltage 13 enters the charger 14, it is directly transformed into a direct voltage through rectification and filtering via rectifier and filter circuit 1, which direct voltage is charged to trigger diodes D1 and D2 and then onto the base electrode of the oscillating transistors T1 and T2 the trigger diodes D1 and D2 which turn the transistors T1, T2 on and off. Due to the trigger diodes D1 and D2, the two transistors T1 and T2 are alternatively turned on and off - one T1 on and one off, and vice versa. These two transistors T1, T2 are part of the other T2, the oscillating circuit 5. According to element parameters, the oscillation frequency of the transistors T1, T2 is about 30 KC (30.000 cycles), with a high oscillating voltage of about two or three hundred volts.

As the combination of the rectifier and filter circuit 1, transistor base drive circuit 4 and transistor oscillating circuit 5 transformes the input AC voltage 13 of 50 Hz or 60 Hz into a high-frequency voltage, a relatively smaller and cheaper high-tension and high-frequency transformer 2 can be used to separate and transform input and output voltage. Therefore, a high-frequency transformer 2 and a rectifier and filter circuit 1 can be connected via the oscillating circuit 5 to transform high-frequency and high-tension voltage so as to be supplied to a charging circuit of electrical tools.

In other words, trigger diodes D1, D2 are used to come to a transistor oscillating circuit 5, which transforms an alternating voltage of 50 Hz or 60 Hz into a high-frequency alternating voltage of 20-100 KC (20.000-100.000 cycles). Therefore, a low voltage for charging for instance power tools can be obtained from a high-frequency transformer 2 which is relatively smaller and cheaper. Low voltage can be transformed via the second rectifier and filter circuit 3 into a direct voltage for charging voltage supplied by the charger 14. The material cost of the whole circuit 1-5 is cheaper than for conventional transformer or charger, which may remarkably save cost.

## Claims

1. Transformer circuit of a charger (14), comprising a power output connected with a rectifier and filter circuit (1), **characterized in, that**
an output (6) of said rectifier and filter circuit (1) being connected with a transistor base drive circuit (4), which transistor base drive circuit (4) is connected with a base electrode of each of at least two transistors (T1, T2) in a transistor oscillating circuit (5), whereas the transistors (T1, T2) are connected with each other, and wherein an output (16) of said transistor oscillating circuit (5) is connected with a primary coil (11) of a high-tension, high-frequency transformer (2), whose secondary coil is connected with a second rectifier and filter circuit (3).

2. Transformer circuit according to claim 1 comprising a first rectifier and filter circuit (1),
a transistor base drive circuit (4) comprising a first and a second trigger diode (D1, D2),
a transistor oscillating circuit (5) comprising a first and a second transistor (T1, T2) and
a high-tension, high-frequency transformer (2),
wherein an output (6) of the first rectifier and filter circuit (1) is connected with the first and second trigger diode (D1, D2) of the transistor base drive circuit (4),
which first and second trigger diodes (D1, D2) are connected with the base electrode of one of the first or second transistors (T1, T2) of the transistor oscillating circuit (5), respectively,
whereas the first and second transistor (T1, T2) are connected with each other,
and wherein an output (16) of said transistor oscillating circuit (5) is connected with a primary coil (11) of the high-tension, high-frequency transformer (2), whose secondary coil is connected with a second rectifier and filter circuit (3).

3. Transformer circuit according to claim 1 or 2, **characterized in, that**
the transistor base drive circuit (4) comprises the first and the second trigger diode (D1, D2), a first and a second resistor (R1, R2), and a first and a second exciting coil (L1, L2).

4. Transformer circuit according to one of the preceding claims, **characterized in, that**
the transistor oscillating circuit (5) comprises the first and the second triode (T1, T2), a first and a second feedback resistor (R3, R4), a first and a second capacitor (C1, C2) and a coil (L3).

5. Transformer circuit according to one of the claims 2-4, **characterized in, that**
the output (6) of the rectifier and filter circuit (1) being connected in parallel with the positive electrodes of said trigger diodes (D1, D2), respectively.

6. Transformer circuit according to claim 4 or 5, **characterized in, that**
a series circuit of the first exciting coil (L1) and the first resistor (R1) is connected between a negative electrode of the first trigger diode (D1) and a base electrode of the first triode (T1), whereas the first feedback resistor (R3) being connected between said negative electrode of the first trigger diode (D1) and an emitting electrode of the first triode (T1) ; and
that said negative electrode of the first trigger diode (D1) being connected in parallel with a collector electrode of the second triode (T2) and the coil (L3), whereas another side of the coil (L3) is connected with one side (11a) of the primary coil (11) of the high-frequency transformer (2).

7. Transformer circuit according to one of the claims 4-6, **characterized in, that**
a series circuit of the second exciting coil (L2) and the second resistor (R2) is connected between a negative electrode of the second trigger diode (D2) and earth (10);
a negative electrode of the second trigger diode (D2) is connected with a base electrode of the second triode (T2);
the second feedback resistor (R4) is connected between an emitting electrode of the second triode (T2) and earth (10);
and another side (11b) of said primary coil (11) of the high-frequency, high-tension transformer (2) is connected in parallel with the first and second capacitors(C1, C2),
whereas another side of the first capacitor (C1) is connected with the collector electrode of the first triode (T1), and
the other side of the second capacitor(C2) is connected with earth (10).

8. Charger (14) comprising a transformer circuit according to one of the claims 1-7.

9. Charger according to claim 8, comprising additionally a high-tension, high-frequency transformer (2).

10. Charger according to claim 8 or 9, comprising additionally a second rectifier and filter circuit (3).
